# EUROPÄISCHE PATENTSCHRIFT

(11) **EP 3 408 904 B1**
(45) Veröffentlichungstag und Bekanntmachung des Hinweises auf die Patenterteilung: **09.03.2022**
(21) Anmeldenummer: 17701341.4
(22) Anmeldetag: 26.01.2017
(51) Int. Cl.: H02G 1/12, H01R 43/28

(54) **KABELBEARBEITUNGSEINRICHTUNG**
CABLE PROCESSING DEVICE
DISPOSITIF DE TRAITEMENT DE CABLE

(30) Priorität: 26.01.2016 EP 16152828
(43) Veröffentlichungstag der Anmeldung: 05.12.2018
(73) Patentinhaber: Komax Holding AG, 6036 Dierikon (CH)
(72) Erfinder: BLUM, Flavio, 6020 Emmenbrücke (CH); WICKI, Beat, 6043 Adligenswil (CH)
(74) Vertreter: Inventio AG
(86) Internationale Anmeldenummer: PCT/EP2017/051611
(87) Internationale Veröffentlichungsnummer: WO 2017/129658

(56) Entgegenhaltungen:
- EP-A1- 0 598 276
- EP-A1- 1 028 501
- DE-A1- 3 617 634
- DE-A1- 4 105 631
- DE-B3-102009 031 076

## Beschreibung

Die Erfindung betrifft eine Kabelbearbeitungseinrichtung gemäss dem Oberbegriff von Anspruch 1. Derartige Kabelbearbeitungseinrichtungen werden für die Konfektionierung von Kabeln verwendet. Bei der Konfektionierung von Kabeln werden Kabel abgelängt und abisoliert; danach können die Kabelenden gecrimpt sowie gegebenenfalls mit Tüllen und mit Steckergehäusen bestückt werden.

Die Kabel, wie beispielsweise isolierte Litzen oder Vollleiter aus Kupfer oder Stahl, die auf der Kabelbearbeitungseinrichtung verarbeitet werden, werden üblicherweise in Fässern, auf Rollen oder als Bündel bereitgestellt und mit einer Kabelfördereinrichtung zu den Bearbeitungsstationen geführt. Eine Kabelbearbeitungseinrichtung ist beispielsweise in der EP 1 447 888 A1 gezeigt. Die EP 1 447 888 A1 zeigt eine Kabelbearbeitungseinrichtung mit einer Abisoliereinheit und zwei Crimpstationen als Bearbeitungsstationen. Das Kabel wird mit einer als Bandantrieb ausgebildeten Kabelfördereinrichtung zu den Bearbeitungsstationen geführt, wobei diese Kabelfördereinrichtung als Kabelvorschub zum Bewegen des Kabels entlang einer Maschinenlängsachse der Kabelbearbeitungseinrichtung ausgestaltet ist.

Wenn der Kabelvorrat, beispielsweise eine Kabelrolle, zu Ende geht, muss ein neues Kabel von einer neuen Kabelrolle entnommen und den Bearbeitungsstationen zugeführt werden. Es kann für die Kabelkonfektionierung auch notwendig werden, andere Kabel, beispielsweise Kabel mit einer anderen Farbe, zu verarbeiten. Für diesen Zweck ist es bekannt, eine Kabelbearbeitungseinrichtung mit einem Kabelwechsler einzusetzen. Kabelwechsler zum wahlweisen Zuführen von Kabeln zu den Bearbeitungsstationen verfügen üblicherweise über zwei Führungseinheiten zum Führen und Halten jeweils eines Kabels. Dank der zweiten Führungseinheit, in der ein zweites Kabel geführt und gehalten ist, wird ein schneller Kabelwechsel ermöglicht. Die zweite bzw. zusätzliche Führungseinheit erlaubt es, während dem Betrieb bzw. bei laufender Kabelbearbeitungseinrichtung schon ein zweites Kabel vorzubereiten. Somit kann ein Produktionsunterbruch beispielsweise durch ein leer werdendes Kabelfass verhindert werden, indem ein neues Fass bereitgestellt und das entsprechende Kabel bereits in der zweiten Führungseinheit aufgenommen ist. Die Umrüstzeit kann verkürzt werden und es können je nach Bedarf abwechselnd zwei verschiedene Kabel verarbeitet werden. Ein derartiger Kabelwechsler ist beispielsweise aus der EP 1 879 199 A2 bekannt geworden. Bei diesem Kabelwechsler sind die Führungseinheiten trommelförmig angeordnet. Für den Kabelwechsel muss eine Rotationsbewegung ausgeführt werden, was zu einem komplizierten maschinellen Aufbau führt. Die Trommel muss mit den beiden Führungseinheiten inklusive einer Drehlagerung für die Trommel gemeinsam abgesenkt werden, um das Kabel in den Wirkbereich der Kabelfördereinrichtung zu bringen. Ein weiterer Nachteil besteht darin, dass die Kabel sich kreuzen und berühren können.

Eine Kabelbearbeitungseinrichtung mit ebenfalls trommelförmig angeordneten Führungseinheiten ist aus der DE 41 05 631 A1 bekannt geworden. Zum Wechseln von einem Kabel auf ein anderes muss eine selektive Rotationsbewegung durchgeführt werden, bei welcher alle Führungseinheiten miteinander gedreht werden. Weitere Kabelbearbeitungseinrichtungen mit Kabelwechslern sind aus den Offenbarungsschriften EP 0 598 276 A1, DE 36 17 634 A1 und DE 10 2009 031076 B3 bekannt.

Eine weitere Kabelbearbeitungseinrichtung mit einem Kabelwechsler der eingangs genannten Art ist in der EP 1 213 800 B1 gezeigt. Dieser Kabelwechsler kann eine grosse Zahl von Kabeln aufnehmen, die wahlweise mit Hilfe der Kabelfördereinrichtung den Bearbeitungsstationen zur Bearbeitung der Kabelenden zugeführt werden. Der Kabelwechsler verfügt über eine Vielzahl von Führungseinheiten, die linear übereinander angeordnet sind. Die Führungseinheiten sind dabei in einem vertikalen Rahmen angeordnet. Der Rahmen lässt sich in vertikaler Richtung auf und ab bewegen. Die im Kabelwechsler übereinander angeordneten Kabel können unterschiedliche Querschnitte, Farben, Isolationen, Leiterbeschaffenheiten aufweisen. Je nach dem zu verarbeitenden Kabel wird der Rahmen auf oder ab bewegt, bis die jeweilige Kabelführung mit dem gewünschten Kabel in der richtigen Position auf der Maschinenlängsachse in der Kabelfördereinrichtung liegt. Die Kabelbearbeitungseinrichtung mit diesem Kabelwechsler zeichnet sich zwar durch eine grosse Variabilität aus und der Kabelwechsler kann bei einer Sequenzverarbeitung und insbesondere für eine Gehäusebestückung eingesetzt werden, jedoch ist die Maschine aufwendig und komplex und führt zu relativ hohen Anschaffungskosten. Auch ist es bei diesem System nicht oder zumindest kaum möglich, während dem Betrieb neue Kabel in den Kabelwechsler einzuführen.

Es ist deshalb eine Aufgabe der vorliegenden Erfindung, die Nachteile des Bekannten zu vermeiden und insbesondere eine Kabelbearbeitungseinrichtung zu schaffen, die einen effizienten Kabelwechsel ermöglicht.

Diese Aufgabe wird erfindungsgemäss mit einer Kabelbearbeitungseinrichtung mit den Merkmalen des Anspruchs 1 gelöst. Die Kabelbearbeitungseinrichtung dient insbesondere zur Konfektionierung von Kabeln und umfasst eine oder mehrere Bearbeitungsstationen zum Bearbeiten von Kabelenden der Kabel. Als Bearbeitungsstationen kommen beispielsweise Abisolierstationen, Tüllenstationen und Crimpstationen in Frage. Die Kabelbearbeitungseinrichtung umfasst weiter eine entlang einer Maschinenlängsachse der Kabelbearbeitungseinrichtung verlaufende Kabelfördereinrichtung zum Transportieren eines Kabels in Richtung der Maschinenlängsachse zur wenigstens einen Bearbeitungsstation. Die Kabelfördereinrichtung ist dabei vorzugsweise als Kabelvorschub ausgebildet. Die vorzugsweise als Kabelvorschub ausgebildete Kabeltransportvorrichtung kann als Rollenantrieb oder Bandantrieb ausgeführt sein. Der Rollenantrieb oder Bandantrieb kann einfach durch Auseinanderbewegen der einander gegenüberliegenden Rollen oder Bänder in eine Offenstellung gebracht werden, damit die Führungseinheit mit dem zur Weiterverarbeitung gewünschten Kabel einfach in die Kabelfördereinrichtung eingebracht werden kann.

Zum wahlweisen und maschinellen Zuführen von Kabeln zur wenigstens einen Bearbeitungsstation zur Bearbeitung der Kabelenden ist ein im Bereich der Kabelfördereinrichtung angeordneter Kabelwechsler vorgesehen. Der Kabelwechsler weist wenigstens zwei Führungseinheiten zum Führen und Halten jeweils eines Kabels auf, wobei die Führungseinheiten zwischen einer Ruhestellung zum Pausieren oder zur Aufnahme neuer Kabel und einer Aktivstellung zum Erstellen einer Wirkverbindung mit der Kabelfördereinrichtung bewegbar ist.

Die Führungseinheiten des Kabelwechslers können mittels eines Aktuators oder mehrerer Aktuatoren, gegebenenfalls sogar manuell zwischen der Ruhestellung und der Aktivstellung bewegt werden. Hierfür können beispielsweise pneumatische Mittel verwendet werden. Als Aktuatoren kommen jedoch auch hydraulische Mittel, Linearantriebe oder auch motorische Antriebe in Frage. Wenn sich die Führungseinheit in der Ruhestellung befindet, ist die Führungseinheit ausserhalb der Kabelfördereinrichtung positioniert, so dass das in der Führungseinheit gehaltene Kabel temporär nicht bearbeitet werden kann. In der Ruhestellung ist das von der entsprechenden Führungseinheit getragene Kabel von der Maschinenlängsachse beabstandet und die Führungseinheit ist in der Ruhestellung derart im Kabelwechsler angeordnet, dass die Führungseinheit parallel zur Maschinenlängsachse verläuft bzw. orientiert ist. Wenn sich die Führungseinheit in der Aktivstellung befindet, dann ist die Führungseinheit derart innerhalb der Kabelfördereinrichtung positioniert, dass das Kabel von der Kabelfördereinrichtung ergriffen und transportiert werden kann. Das der Führungseinheit zugeordnete Kabel kann in der Aktivstellung somit am Verarbeitungsprozess unmittelbar teilnehmen. Besonders bevorzugt ist die Führungseinheit in der Aktivstellung koaxial zur Maschinenlängsachse positioniert und ausgerichtet, das Kabel der Führungseinheit in der Aktivstellung liegt damit auf oder in der Maschinenlängsachse, was einen effizienten Transport des Kabels mittels der Kabelfördereinrichtung zur Bearbeitung gewährleistet.

Die Führungseinheiten können Führungsmittel wie etwa ein Führungsrohr umfassen, um das Kabel durch die Fördereinrichtung zu führen. Vorzugsweise weist dabei eine Führungseinheit wenigstens ein eingangsseitiges Führungsrohr auf, das in Bezug auf die Transportrichtung in der Maschinenlängsachse vor der Kabelfördereinrichtung angeordnet ist. Die Führungseinheiten können weiterhin Bremsmittel umfassen, die das nicht transportierte Kabel in der Ruhestellung bezüglich der Kabelachse lagemässig festhalten.

Erfindungsgemäss sind die wenigstens zwei Führungseinheiten derart ausgestaltet bzw. im Kabelwechsler integriert oder verbaut, dass die Führungseinheiten unabhängig voneinander von der Ruhestellung in die Aktivstellung (oder umgekehrt: von der Aktivstellung in die Ruhestellung) bewegbar sind. Unabhängig voneinander bewegbar bedeutet, dass, wenn eine der Führungseinheiten bewegt wird, die anderen Führungseinheiten von dieser Bewegung nicht betroffen sind. Die anderen Führungseinheiten verbleiben bevorzugt in den jeweiligen Ruhestellungen. Mit den erwähnten anderen Führungseinheiten könnte auch nur eine Führungseinheit gemeint sein. Denn sofern eine für zwei Kabel ausgelegte Kabelbearbeitungseinrichtung zwei Führungseinheiten aufweist, würde selbstverständlich nur die eine andere Führungseinheit in der Ruhestellung verbleiben.

Die unabhängige Bewegbarkeit kann beispielsweise dadurch erreicht werden, dass die Führungseinheiten nicht mechanisch miteinander verbunden oder gekoppelt sind. Dadurch, dass die gewählte Führungseinheit zum Erstellen der gewünschten Stellung (Ruhestellung oder Aktivstellung) ohne Einflussnahme auf die anderen Führungseinheiten bewegt werden kann, lassen sich mehrere Vorteile erreichen. Dank der unabhängigen Bewegbarkeit der Führungseinheiten kann die Betriebsweise des Kabelwechslers hinsichtlich Effektivität erheblich verbessert werden. Die Führungseinheiten sind für den Bediener in der Ruhestellung auch während dem Produktionsbetrieb für die Einführung neuer Kabel einfach zugänglich. Der Kabelwechsler zeichnet sich weiterhin durch einen einfachen mechanischen Aufbau aus. Damit kann ein kompaktes und kostengünstiges Modul geschaffen werden. Weiter ist der Kabelwechsel mit einfachen technischen Mitteln automatisierbar. Der Kabelwechsler kann in unterschiedliche Typen und Varianten von Kabelbearbeitungsmaschinen eingebaut werden. Es ist auch denkbar, konventionelle Kabelbearbeitungsmaschinen mit dem hier beschriebenen Kabelwechsler nachzurüsten. Ein weiterer Vorteil besteht darin, dass die Kabel der Führungseinheiten sauber voneinander getrennt werden können.

Der Kabelwechsler ist derart ausgeführt, dass, wenn eine der Führungseinheiten der wenigstens zwei Führungseinheiten beispielsweise mittels eines Aktuators von der Ruhestellung in die Aktivstellung bewegt wird, die andere Führungseinheit oder die anderen Führungseinheiten temporär ortsfest in der Ruhestellung verbleibt bzw. verbleiben.

Wenn zum Beispiel eine für zwei Kabel ausgelegte Kabelbearbeitungseinrichtung zwei Führungseinheiten aufweist, dann kann der Kabelwechsler im Wesentlichen drei Stellungen einnehmen, wobei dies folgende drei Stellungen sind: eine Ausgangsstellung und zwei Betriebsstellung. In der Ausgangsstellung befinden sich die zwei Führungseinheiten jeweils in ihren Ruhestellungen. Eine erste Betriebsstellung liegt vor, wenn eine erste Führungseinheit in der Aktivstellung ist, während die zweite Führungseinheit in der Ruhestellung verbleibt; eine zweite Betriebsstellung liegt vor, wenn die andere bzw. zweite Führungseinheit in der Aktivstellung ist, während die erste Führungseinheit in der Ruhestellung ist.

Besonders bevorzugt können die wenigstens zwei Führungseinheiten des Kabelwechslers, wenn sich diese wenigstens zwei Führungseinheiten jeweils in ihren Ruhestellungen befinden, nebeneinander und vorzugsweise auf einer gemeinsamen horizontalen Ebene liegend positioniert sind. Die Führungseinheiten können in den Ruhestellungen über oder unter der Kabelfördereinrichtung angeordnet sein.

Die wenigstens zwei Führungseinheiten können jeweils mit oder an Schubelementen verbunden oder befestigt sein, wobei die Schubelemente zum Bewegen der jeweiligen Führungseinheiten translatorisch bewegbar sind. Die translatorische Bewegung kann dabei quer zur Maschinenlängsachse erfolgen. Bevorzugt sind die Schubelemente translatorisch innerhalb einer Ebene bewegbar, die senkrecht zur Maschinenlängsachse verläuft.

Vorteilhaft kann es sein, wenn der Kabelwechsel vorzugsweise vertikale Schubführungen beispielsweise in Form von Führungsstangen zum vorzugsweise vertikalen Absenken und Anheben der jeweiligen Führungseinheiten aufweist, wobei die Schubelemente an den Schubführungen jeweils verschiebbar gelagert sind. Dank den in Schubführungen verschiebbar gelagerten Schubelementen können die Führungseinheiten einfach zum Erstellen der Aktivstellung oder der Ruhestellung bewegt werden.

In einer weiteren Ausführungsform der Kabelbearbeitungseinrichtung kann die jeweilige Führungseinheit jeweils über eine Hebelanordnung umfassend wenigstens ein Hebelteil schwenkbar am jeweiligen Schubelement gelagert sein. Die zugehörige Schwenkachse verläuft dabei bevorzugt achsparallel zur Maschinenlängsachse. Dadurch kann die Führungseinheit eine seitliche Bewegung quer zur durch die Schubelemente vorgegebenen translatorischen Absenk- oder Anheberichtung ausführen. Anstelle von Hebelanordnungen mit schwenkbaren Hebelteilen könnte die Seitwärts- oder Querbewegung der Führungseinheit auch unter Verwendung von anderen Mitteln ermöglicht werden. Beispielsweise könnte die Führungseinheit an einem elastischen Teil angeordnet sein, das zum Erstellen der Aktivstellung durch entsprechende Einwirkung verbogen werden kann.

Das Hebelteil kann eine Schwenkachse aufweisen, über die das Hebelteil mit dem Schubelement schwenkbar verbunden ist. Auf der gegenüberliegenden Seite des Hebelteils bzw. im Bereich eines vorderen, freien Endes des Hebelteils kann die Führungseinheit angeordnet sein.

Die vorgängig erwähnte seitliche Bewegung der vorzugsweise schwenkbar am Schubelement gelagerten Führungseinheit kann durch verschiedene Massnahmen erzielt werden. Zum Beispiel kann ein horizontal wirkender Aktor eingesetzt werden, der die Führungseinheit aktiv zur Seite hin bewegen kann. Vorteilhaft ist es jedoch, wenn die seitliche Bewegung auf passive Weise erfolgt. Hierfür kann die Kabelbearbeitungseinrichtung eine Führungsbahn zum Vorgeben einer vordefinierten Bewegung der Führungseinheit von der Ruhestellung in die Aktivstellung aufweisen. Eine solche Führungsbahn wird vorzugsweise zusammen mit der Hebelanordnung, über die die jeweilige Führungseinheit schwenkbar am Schubelement gelagert ist, eingesetzt.

Vorteilhaft kann es weiter sein, wenn die Kabelbearbeitungseinrichtung eine Führungsbahn aufweist, die gegenüberliegend den Führungseinheiten angeordnet ist. Die Führungseinheit, die seitlich zum Erstellen der Aktivstellung bewegt werden soll, wirkt bei einer Absenkbewegung des Schubelements derart mit der Führungsbahn zusammen, dass die Führungseinheit beispielsweise gleitend oder rollend an der Führungsbahn entlang fahrbar ist. Zum gleitenden oder rollenden Entlangfahren an der Führungsbahn kann die Führungseinheit ein Angriffsglied aufweisen.

Die Führungsbahn kann wenigstens eine Auflaufflanke aufweisen, entlang der jeweils eine der Führungseinheiten entlang fahrbar ist. Wenn der Kabelwechsler beispielsweise zwei Führungseinheiten aufweist, dann weist vorzugsweise die Führungsbahn zwei Auflaufflanken auf. Die Führungsbahn kann also zwei Führungsabschnitte aufweisen, wobei eine der zwei Auflaufflanken jeweils einen Führungsabschnitt bildet. Die Führungsabschnitte der Führungsbahn können durch ein Bauteil gebildet sein. Es ist allerdings auch vorstellbar, zwei separate Bauteile zum Schaffen der Führungsabschnitte bzw. der Auflaufflanken vorzusehen.

Wenn der Kabelwechsler beispielsweise zwei Führungseinheiten aufweist, kann die Führungsbahn mit beiden Führungseinheiten in Wirkverbindung stehen. Es ist jedoch auch möglich, dass nur eine Führungseinheit zum Erstellen der Aktivstellung beim gleitenden oder rollenden Entlangfahren an der Führungsbahn bzw. Abfahren der Führungsbahn seitlich weggeschoben werden muss, während die zweite bzw. andere Führungseinheit derart über der Fördereinrichtung angeordnet ist, dass nur eine translatorische Bewegung ausgeführt werden muss. In diesem Fall ist somit lediglich eine Auflaufflanke notwendig. Es sind allerdings auch andere Ausführungsvarianten für die Führungsbahn vorstellbar. Anstelle der beschriebenen Führungsbahn mit der wenigstens einen Auflaufflanke könnte zum Schaffen einer Kurvensteuerung eine Kulisse mit einem Führungskanal vorgesehen werden. In diesem Führungskanal der Kulisse kann ein der Führungseinheit zugeordneter Steuerkörper beispielsweise in Form eines Nockens zwangsläufig geführt werden.

Ein weiterer Vorteil kann sich dadurch ergeben, wenn an die Auflaufflanke eine Positioniersenke zum lagemässigen Fixieren der jeweiligen Führungseinheit in der Aktivstellung anschliesst. Die Aktivstellung kann so zuverlässig angefahren und gesichert werden.

Besonders bevorzugt weist die Führungsbahn zwei jeweils einer Führungseinheit zugeordnete, V-förmig aufeinander zulaufende Auflaufflanken auf. In diesem Fall ist die Positioniersenke im Mündungsbereich der Auflaufflanken, angeordnet.

Die jeweilige Führungseinheit kann jeweils eine Festhalteeinrichtung zum Sichern des Kabels in der Ruhestellung aufweisen. Die Festhalteeinrichtung kann Bremsmittel umfassen, die das nicht transportierte Kabel in der Ruhestellung bezüglich der Kabelachse lagemässig festhalten. Das Bremsmittel kann beispielsweise über ein Klemmglied das Kabel klemmend festhalten und so ein Verrutschen des Kabels verhindern. Das oder die Bremsmittel kann dabei derart ausgestaltet sein und insbesondere mit der Führungsbahn oder einen anderen Anschlag zusammenwirken, dass beim Erstellen der Aktivstellung das Bremsmittel die Beaufschlagung des Kabels aufhebt und das Kabel bezüglich der Kabelachse freigegeben wird. Die Aufhebung der Beaufschlagung des Kabels durch die Festhalteeinrichtung ergibt sich bevorzugt durch Einwirkung eines Anschlags auf die Führungseinheit, wodurch die Beaufschlagung des Kabels bloss durch die Bewegung der Führungseinheit automatisch oder selbsttätig aufgehoben wird. Weiterhin können Klemm- und Rückzugselemente in der Art der EP 1 213 800 B1 vorgesehen werden.

Für das zuverlässige Anfahren der Ruhestellung kann die Führungseinheit wenigstens ein Federelement aufweisen. Besonders bevorzugt ist dieses Federelement dabei in die Ruhestellung vorgespannt. So erzeugt das Federelement in der Aktivstellung eine Rückstellkraft auf die Führungseinheit, wodurch sich eine vorteilhafte Rückführbewegung in die Ruhestellung ergibt. Dieses Federelement wird daher nachfolgend als Rückstellfeder bezeichnet.

Zum lagemässigen Fixieren der Führungseinheit in der Ruhestellung kann wenigstens ein Stopp- oder Positionierelement zum Bilden eines Anschlags für die Führungseinheit und zum Begrenzen der Schwenkbewegung beim Rückführen der Führungseinheit von der Aktivstellung in die Ruhestellung vorgesehen sein.

Für eine einfache Handhabung kann es vorteilhaft sein, wenn vor dem Kabelwechsler wenigstens ein Trennelement zum Separieren und Ordnen der wenigstens zwei Kabel, die anschliessend in den Kabelwechsler gelangen, angeordnet ist. Das Trennelement kann beispielsweise durch eine Trennplatte gebildet werden. Die Trennplatte kann, wenn die Führungseinheiten wenigstens in der Ruhestellung nebeneinander und vorzugsweise auf einer horizontalen Ebene liegend angeordnet sind, vertikal ausgerichtet oder angeordnet sein.

In einer weiteren Ausführungsform können die Führungseinheiten zum Bewegen der jeweiligen Führungseinheiten zwischen Aktivstellung und Ruhestellung jeweils über Linearführungen verschiebbar gegenüber einem Maschinensupport der Kabelbearbeitungseinrichtung gelagert sein. Die Linearführung kann dabei eine Profilschiene als Führungsmittel umfassen. Diese Profilschiene kann direkt am Maschinensupport oder über eine Stützkonstruktion am Maschinensupport befestigt sein. Die Linearführung umfasst weiter einen zur Profilschiene komplementär ausgestalteten Schlitten, an dem die jeweilige Führungseinheit angeordnet ist. Der Schlitten und somit die mit diesem verbundene Führungseinheit lässt sich einfach und präzise zwischen Aktivstellung und Ruhestellung verschieben. Dieser Schlitten kann als vorgängig schon erwähntes Schubelement angesehen werden.

Wenigstens eine der Linearführungen kann gegenüber der Vertikalen in einer Schrägstellung in der Kabelbearbeitungseinrichtung angeordnet sein, so dass die der vorgenannten schrägen Linearführung zugeordnete Führungseinheit schräg zwischen Ruhestellung und Aktivstellung translatorisch bewegbar ist. Diese schräg bewegbare Führungseinheit kann beispielsweise über einen Haltearm starr mit einem Schlitten der Linearführung verbunden sein. Eine Schwenkmechanik ist nicht erforderlich. Dank der schräg gestellten Linearführung lässt sich die Führungseinheit einfach und effizient in die Fördereinrichtung zum Erstellen der Aktivstellung einbringen.

Weiter kann eine Kulisse für eine definierte Bewegung wenigsten einer der Führungseinheiten entlang einer Steuerkurve von der Ruhestellung in die Aktivstellung vorgesehen sein. Die Kulisse kann einen Führungschlitz oder eine Führungssnut aufweisen, in dem ein Steuerkörper entlang fahrbar ist. Der Längsverlauf des Führungschlitzes oder der Führungssnut gibt dabei die Steuerkurve vor. Der Steuerkörper ist dabei der jeweiligen Führungseinheit zugeordnet. Zum Beispiel kann der Steuerkörper an einem schwenkbar an einem Schubelement oder Schlitten der Linearführung gelagertes Hebelteil zum Tragen der jeweiligen Führungseinheit angeordnet sein. Der Steuerkörper kann eine Rolle umfassen, die frei drehbar am Hebelteil angebracht ist. Ein einfacher Steuernocken, der in den Führungschlitz oder die Führungssnut in Eingriff steht, wäre als Steuerkörper selbstverständlich auch denkbar.

Die Kulisse kann derart mit dem Maschinensupport verbunden oder angeordnet sein, dass die zugehörige Führung (Führungschlitz oder Führungssnut) quer und vorzugswesie senkrecht zur Maschinenlängsachse verläuft. Die Führung kann dabei je nach gewünschter Bewegung gerade und gekrümmte Führungsabschnitte aufweisen.

Das schwenkbar an einem Schubelement oder Schlitten einer Linearführung gelagerte Hebelteil kann bogenförmig ausgebildet sein.

Vorteilhaft kann es sein, wenn der Mechanismus zum Bewegen der Führungseinheiten unterschiedlich ausgestaltet ist. Besonders vorteilhaft kann es sein, wenn eine der Führungseinheiten zwischen Ruhestellung und Aktivstellung schräg translatorisch bewegbar ausgestaltet ist und die andere Führungseinheit zwischen Ruhestellung und Aktivstellung einer durch die Kulisse vorgegebenen Kurve folgt.

Die Kabelbearbeitungseinrichtung kann zum jeweiligen Bewegen der Führungseinheiten zwischen Ruhestellung und Aktivstellung linear wirkende Aktuatoren aufweisen, wobei die Aktuatoren aus einer Gruppe bestehend aus Pneumatikzylindern, Hydraulikzylindern, elektromechanischen Linearantrieben, Zahnstangenantrieben oder Spindelantrieben ausgewählt sind.

Weitere Vorteile und Einzelmerkmale ergeben sich aus der nachfolgenden Beschreibung eines Ausführungsbeispiels und aus den Zeichnungen. Es zeigen:
- Fig. 1: eine perspektivische Darstellung einer Kabelbearbeitungseinrichtung umfassend einen erfindungsgemässen Kabelwechsler,
- Fig. 2: eine Detailansicht der Kabelbearbeitungseinrichtung aus Fig. 1 in einer Vorderansicht mit dem Kabelwechsler in einer Ausgangsstellung,
- Fig. 3: die Kabelbearbeitungseinrichtung mit dem Kabelwechsler in einer ersten Betriebsstellung,
- Fig. 4: die Kabelbearbeitungseinrichtung mit dem Kabelwechsler in einer zweiten Betriebsstellung,
- Fig. 5: eine vergrösserte Darstellung des Kabelwechslers gemäss Fig. 3,
- Fig. 6: der Kabelwechsler von Fig. 5 in einer Querschnittsdarstellung,
- Fig. 7: eine vergrösserte perspektivische Darstellung des Kabelwechslers für die Kabelbearbeitungseinrichtung,
- Fig. 8: eine weitere Darstellung der Kabelbearbeitungseinrichtung mit dem Kabelwechsler in der Ausgangsstellung,
- Fig. 9: die Kabelbearbeitungseinrichtung mit einer Kabelfördereinrichtung in einer Offenstellung,
- Fig. 10: die Kabelbearbeitungseinrichtung nach Absenken einer Führungseinheit des Kabelwechslers,
- Fig. 11: die betriebsbereite Kabelbearbeitungseinrichtung mit der Führungseinheit in Aktivstellung und geschlossener Kabelfördereinrichtung,
- Fig. 12: eine perspektivische Darstellung einer weiteren erfindungsgemässen Kabelbearbeitungseinrichtung mit einem Kabelwechsler in einer Ausgangsstellung,
- Fig. 13: die Kabelbearbeitungseinrichtung aus Fig. 12 mit einem Kabelwechsler in einer ersten Betriebsstellung,
- Fig. 14: die Kabelbearbeitungseinrichtung mit dem Kabelwechsler in einer zweiten Betriebsstellung,
- Fig. 15: eine Seitenansicht der Kabelbearbeitungseinrichtung gemäss Fig. 12,
- Fig. 16: eine Seitenansicht der Kabelbearbeitungseinrichtung mit dem Kabelwechsler in der ersten Betriebsstellung,
- Fig. 17: eine Seitenansicht der Kabelbearbeitungseinrichtung mit dem Kabelwechsler in der zweiten Betriebsstellung, und
- Fig. 18: eine vergrösserte Darstellung einer Führungseinheit für den Kabelwechsler der Kabelbearbeitungseinrichtung gemäss Fig. 12.

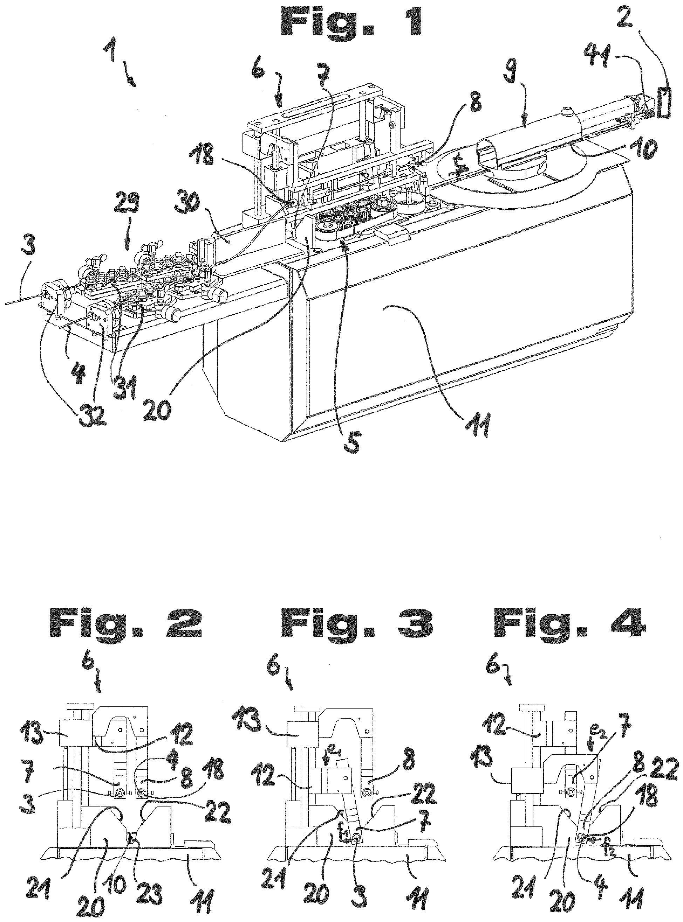

Fig. 1 zeigt eine insgesamt mit 1 bezeichnete Kabelbearbeitungseinrichtung zum Bearbeiten von Kabeln 3, 4 und zum Konfektionieren von Kabelenden. Die Kabelbearbeitungseinrichtung 1 ist vorliegend beispielhaft als Schwenkmaschine ausgeführt und weist eine Schwenkeinheit 9 mit einem Kabelgreifer 41 auf, mit dem das vorauseilende Kabelende des Kabels 3 zu wenigstens einer Bearbeitungsstation 2 gebracht wird. Die Bearbeitungsstation 2 ist vorliegend lediglich symbolhaft dargestellt; so kann die Kabelbearbeitungseinrichtung 1 eine Abläng- und Abisolierstation aufweisen, die in der Regel auf der mit 10 bezeichneten Maschinenlängsachse angeordnet ist. Als weitere Bearbeitungsstationen 2 kommen beispielsweise eine Tüllenstation und eine Crimpstation in Frage. Die Tüllenstation und die Crimpstation sind in der Regel derart in der Kabelbearbeitungseinrichtung 1 angeordnet, dass die Schwenkeinheit 9 um eine vertikale Achse gedreht werden muss.

Die Kabelbearbeitungseinrichtung 1 umfasst für den Kabelvorschub eine Kabelfördereinrichtung 5 zum Zuführen des Kabels 3 zur Schwenkeinheit 9 und den Bearbeitungsstationen 2. Die Kabelfördereinrichtung 5 ist vorliegend als Bandförderer ausgestaltet und fördert das jeweilige Kabel entlang der Maschinenlängsachse 10 zur Schwenkeinheit 9. Die Transportrichtung des Kabels entlang der Maschinenlängsachse 10 ist durch den Pfeil t angedeutet.

Im Bereich der Kabelfördereinrichtung 5 ist ein Kabelwechsler 6 zum wahlweisen Zuführen von Kabeln 3, 4 zur Bearbeitung der Kabelenden angeordnet. Die vorliegende Kabelbearbeitungseinrichtung 1 ist für zwei Kabel 3, 4 ausgelegt, von welchen dann wahlweise mittels des Kabelwechslers 6 eines der Kabel verarbeitet wird. Die Kabel 3, 4 sind Elektrokabel, beispielsweise isolierte Litzen oder isolierte Vollleiter aus Kupfer oder Stahl, die jeweils in (nicht dargestellten) Fässern, auf Rollen, als Bündel oder einem anderen Kabelspeicher bereitgestellt werden. Je nachdem, welches der beiden Kabel 3, 4 konkret verarbeitet werden soll, wird das entsprechende Kabel 3, 4 mit Hilfe des Kabelwechslers 6 in Eingriff mit der Kabelfördereinrichtung 5 gebracht, worauf das entsprechende Kabel transportiert und bearbeitet werden kann. In der Darstellung gemäss Fig. 1 ist dies das mit 3 bezeichnete Kabel. Wenn der Kabelvorrat für das Kabel 3 zu Ende geht, kann dank des Kabelwechslers 6 schnell auf ein neues oder anderes Kabel 4 umgeschaltet werden. Der Aufbau des Kabelwechslers 6 und die genaue Funktionsweise wird nachfolgend anhand der Figuren 2 bis 11 im Detail erläutert.

Die zusätzliche Führungseinheit erlaubt es auch, bei laufender Kabelbearbeitungseinrichtung 1 ein zweites Kabel vorzubereiten. Dadurch kann die Umrüstzeit verkürzt und es können abwechselnd zwei verschiedene Kabel 3, 4 verarbeitet werden. Auch kann ein Produktionsunterbruch durch ein leer werdendes Kabelfass oder ein anderer leer werdender Kabelvorrat verhindert werden, indem ein neues Kabelfass bereitgestellt und das Kabel daraus bereits durch Einführen des Kabels in den Kabelwechsler 6 in der Kabelbearbeitungseinrichtung 1 bereitgestellt wird.

Die Kabelfördereinrichtung 5 mit dem Kabelwechsler 6 sowie die Schwenkeinheit 9 sind auf einem Maschinensupport 11 angebracht. Da die aus Fässern, Rollen oder Bündel an die Kabelbearbeitungseinrichtung 1 herangeführten Kabel 3, 4 mehr oder weniger stark gekrümmt und mit Drall versehen sind, müssen die Kabel jeweils gerade gerichtet werden, wozu eine Richtstation 29 dient. Die Richtstation 29 weist für die Kabel 3 und 4 zwei Richtvorrichtungen 31 auf. Vor den Richtvorrichtungen 31 ist jeweils eine Knotendetektionseinrichtung 32 angeordnet.

Die Figuren 2 bis 4 zeigen die drei wesentlichen Stellungen, die der Kabelwechsler 6 einnehmen kann. Die Stellung des Kabelwechslers 6 gemäss Fig. 2 entspricht einer Ausgangsstellung. Die Figuren 3 und 4 zeigen die zwei möglichen Betriebsstellungen, in der jeweils eines der Kabel 3 (Fig. 3), 4 (Fig. 4) bearbeitet werden kann. Der Kabelwechsler 6 umfasst zwei Führungseinheiten 7, 8 zum Führen und Halten jeweils eines Kabels 3, 4. Die Führungseinheiten 7, 8 sind jeweils schwenkbar an Schubelementen 12, 13 gelagert, wobei die Schubelemente 12, 13 in vertikaler Richtung verfahrbar sind.

In der Ausgangsstellung gemäss Fig. 2 befinden sich beide Führungseinheiten 7 und 8 jeweils in einer Ruhestellung. In der Ausgangsstellung bzw. wenn beide Führungseinheiten 7, 8 sich in ihrer Ruhestellung befinden, sind die Führungseinheiten nebeneinander angeordnet, die Führungseinheiten 7 und 8 und damit auch die jeweils darin gehaltenen Kabel 3 und 4 liegen ersichtlicherweise etwa auf einer gemeinsamen horizontalen Ebene. Durch Absenken eines der Schubelemente 12, 13, kann die die jeweilige Führungseinheit 7, 8 mit dem gewünschten Kabel 3, 4 in die Positionssenke 23 überführt werden, die im Bereich der Maschinenlängsachse liegt. Die Positionssenke 23 verläuft in bzw. entlang der Maschinenlängsachse 10 und gibt eine Aktivstellung vor.

In Fig. 3 ist die erste Führungseinheit 7 in der Aktivstellung, während die zweite Führungseinheit 8 in der Ruhestellung verbleibt; in Fig. 4 ist die zweite Führungseinheit 8 in der Aktivstellung, während die erste Führungseinheit 7 in der Ruhestellung verbleibt, in der Aktivstellung ist die jeweilige Führungseinheit 7 oder 8 zum Erstellen einer Wirkverbindung mit der Kabelfördereinrichtung 5 koaxial zur Maschinenlängsachse 10 positioniert. In der Ruhestellung die jeweilige Führungseinheit 8 oder 7 ausserhalb der Kabelfördereinrichtung 5 positioniert und von der Maschinenlängsachse 10 beabstandet. Die Führungseinheiten 7, 8 des Kabelwechslers 6 sind, wenn sich die Führungseinheiten 7, 8 jeweils in ihren Ruhestellungen befinden, nebeneinander und auf einer gemeinsamen horizontalen Ebene liegend positioniert. Diese Anordnung stellt eine saubere Trennung der Kabel sicher und hat den Vorteil einer guten Zugänglichkeit für den Kabelwechsel auch während dem Produktionsbetrieb.

Zum Erstellen der Aktivstellung ist die mit 20 bezeichnete Führungsbahn vorgesehen, die den Führungseinheiten 7 und 8 gegenüberliegt und mit diesen zusammenwirken kann. Die Führungsbahn 20 umfasst zwei Führungsabschnitte, wobei die Führungsabschnitte ersichtlicherweise durch zwei V-förmig aufeinander zulaufende Auflaufflanken 21 und 22 gebildet werden, die in die schon erwähnte Positionssenke 23 münden. Die Positionssenke 23 ist mit anderen Worten in der Spitze des "V" angeordnet. Wenn nun das Schubelement 12, wie in Fig. 3 gezeigt, in el-Richtung abgesenkt wird, wird die Führungseinheit 7 zunächst in einer ersten Phase rein translatorisch vertikal nach unten bewegt. Nach Kontakt mit der Auflaufflanke 21 wird beim weiteren bzw. fortgesetzten Absenken des Schubelements 12 in e1-Richtung die Führungseinheit 7 zusätzlich ausgeschwenkt. Die entsprechende Schwenkbewegung ist in Fig. 3 mit einem Pfeil f1 angedeutet. Die zweite Führungseinheit 8 wirkt entsprechend mit der Auflaufflanke 22 zusammen. In Fig. 4 sind die Bewegungen für die zweite Führungseinheit 8 mit den Pfeilen e2 (Absenkbewegung) und f2 (Schwenkbewegung) angedeutet.

Anhand der Figuren 3 und 4 ist ersichtlich, dass der Kabelwechsler 6 derart ausgestaltet ist, dass die Führungseinheiten 7 und 8 unabhängig voneinander bewegbar sind. Wenn eine der Führungseinheiten 7, 8 zum Erstellen der Aktivstellung bewegt wird, ist die andere Führungseinheit 7, 8 von dieser Bewegung nicht betroffen. Die andere Führungseinheit 7, 8 verbleibt in ihrer Ruhestellung.

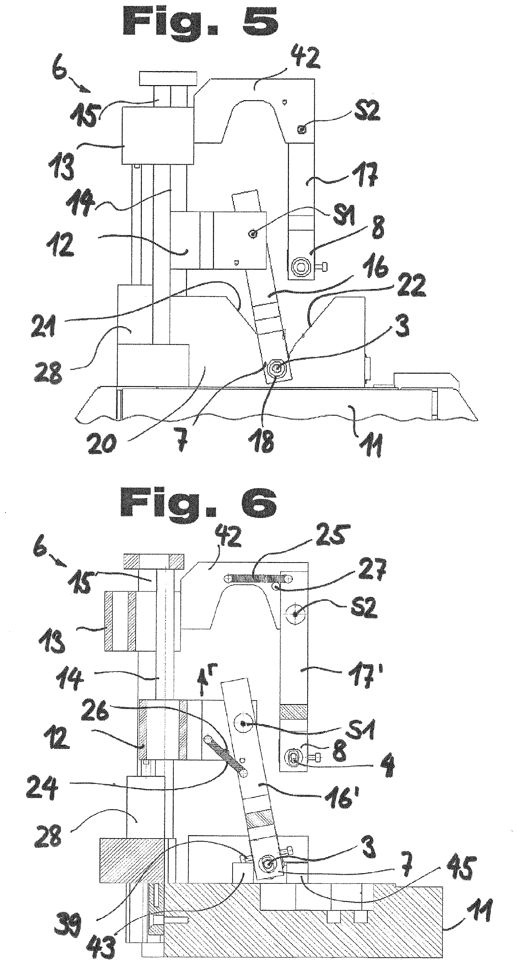

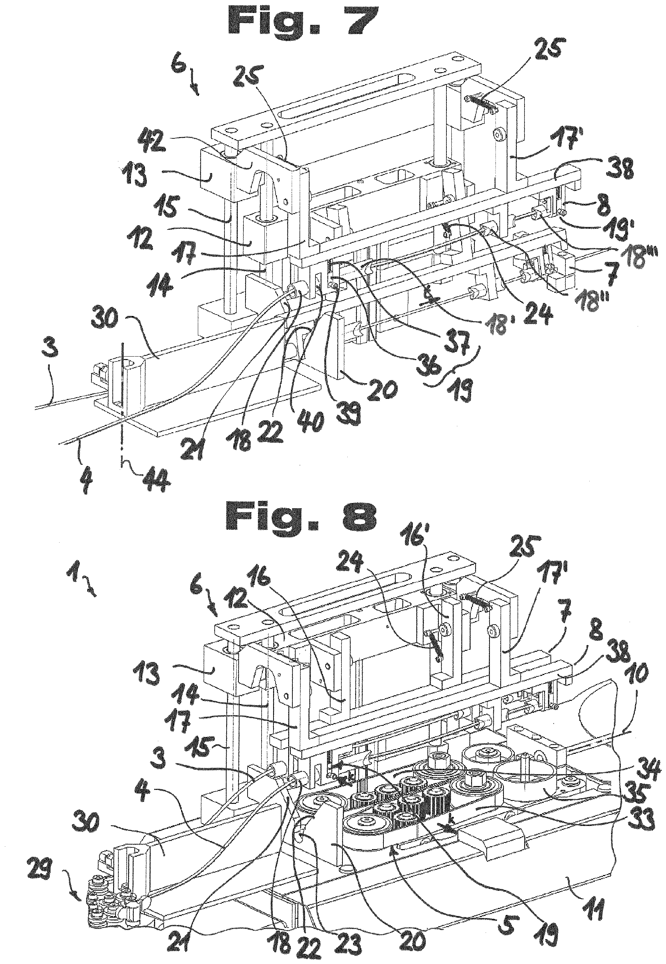

Bis auf den Massstab ist Fig. 5 identisch mit Fig. 3 und dient zur Erläuterung weiterer Details. Wie etwa aus Fig. 5 gut erkennbar ist, sind die Führungseinheiten 7, 8 jeweils schwenkbar an den Schubelementen 12, 13 gelagert. Die jeweiligen Schwenkachsen sind hier mit S1 und S2 bezeichnet. Die Schubelemente 12, 13 sind jeweils an vertikalen Schubführungen 14, 15 verschiebbar gelagert. Die Schubführungen 14, 15 sind, wie etwa aus nachfolgender Fig. 7 ersichtlich ist, als Führungsrohre oder Führungsstangen ausgestaltet. Zum Auf- und Abbewegen der jeweiligen Schubelemente 12, 13 wird im vorliegenden Ausführungsbeispiel je ein Pneumatikzylinder 28 eingesetzt. Vorteilhaft ist es, wenn zwei Pneumatikzylinder vorgesehen sind, wobei jeder Führungseinheit 7, 8 je ein Pneumatikzylinder zugeordnet ist. Die jeweiligen Bewegungen zum Erstellen der Aktivstellung oder der Ruhestellung der beiden Führungseinheiten 7 und 8 können unter Verwendung eines einzigen Pneumatikzylinders 28 ausgeführt werden. Selbstverständlich sind jedoch anstelle pneumatischer Mittel auch andere Aktuatoren zum Erzeugen der erforderlichen Hubbewegung der Schubelemente 12, 13 denkbar. Da die zweite Führungseinheit 8 mit einer von der Schubführung weiter entfernten Auflaufflanke 22 der Führungsbahn 20 zum Erstellen der Aktivstellung zusammenwirkt, weist die Anordnung mit der Führungseinheit 8 ein horizontales Verlängerungsteil 42 auf, das an das Schubelement 12 anschliesst.

Die den Führungseinheiten 7, 8 gegenüberliegend angeordnete Führungsbahn 20 weist zwei schräg verlaufende, gerade Auflaufflanken 21, 22 auf. Grundsätzlich wären auch andere Formgebungen wie etwa Auflaufflanken 21, 22 mit einem krummen Verlauf denkbar. Die Bewegung der Führungseinheit 7, 8 zum Erstellen der Aktivstellung könnte je nach Anwendungszweck auf unterschiedliche Weise realisiert werden. Der im Ausführungsbeispiel gezeigte Kabelwechsler 6 zeichnet sich dadurch aus, dass die Führungseinheit 7, 8 zunächst parallel zu einer durch die Schubführung 14, 15 vorgegeben Achse verschiebbar ist, und nach Kontakt oder Beaufschlagung durch die Führungsbahn 20 zusätzlich schwenkbar ist. Diese Lösung hat den Vorteil, dass die Bewegung der Führungseinheit 7, 8 lediglich über den translatorisch wirkenden Aktuator, der vorliegend den schon erwähnten Pneumatikzylinder 28 umfasst, erfolgt und dass keine zusätzliche Antriebsmittel erforderlich sind, um die Senk-Schwenkbewegung zu erzielen.

Die Führungseinheit 7 ist in der in Fig. 5 gezeigten Aktivstellung in einer ausgeschwenkten Position. Das zugehörige Hebelteil 16 weist in dieser Stellung ersichtlicherweise eine gegenüber der Vertikalen schräge Ausrichtung auf. Das andere Hebelteil 17, das der Führungseinheit 7 zugeordnet ist, ist in der Ruhestellung ersichtlicherweise vertikal ausgerichtet. Die Hebelteile sind in der Vorderansicht gemäss Fig. 5 mit 16 und 17 bezeichnet; da die jeweiligen Hebelanordnungen mit den Hebelelementen zweiteilig ausgestaltet ist, sind die in Fig. 6 erkennbaren Hebelelemente mit 16' und 17' bezeichnet (vgl. z.B. nachfolgende Fig. 8, aus der die jeweiligen vorderen und hinteren Hebelelemente 16, 16' bzw. 17, 17' besonders gut zu sehen sind). Zum Rückführen der Führungseinheit 7 in die Ruhestellung wird das Schubelement 12 nach oben zurück verschoben. Die entsprechende Verschieberichtung ist in Fig. 6 mit dem Pfeil r angedeutet. Die Führungseinheiten 7, 8 sind mittels der Rückstellfedern 24, 25 in der Ruhestellung vorgespannt (Fig. 6). Die Rückstellfedern 24, 25 sind vorliegend als Zugfedern ausgestaltet, bei entsprechender Anpassung wären aber auch Schraubendruckfedern oder anderen Federn denkbar. Dank den Rückstellfedern 24 wird erreicht, dass beim Rückführen der Führungseinheit 3 die ursprüngliche vertikale Ausrichtung wiedererlangt wird. Die Rückstellfedern für die zweite Führungseinheit 8 sind mit 25 bezeichnet. Zum lagemässigen Fixieren der jeweiligen Führungseinheit 7, 8 in der Ruhestellung sind Stoppelemente 26, 27 vorgesehen, die jeweils einen Anschlag für die jeweilige Führungseinheit 7, 8 bzw. für deren Hebelteile 16, 17 bilden und die zum Begrenzen der Schwenkbewegung beim Rückführen der jeweiligen Führungseinheit 7, 8 von der Aktivstellung in die Ruhestellung dienen.

Die Kabel 3, 4 werden mit Festhalteeinrichtungen zum Sichern der jeweiligen Kabel in der Ruhestellung beaufschlagt und axial festgehalten. Diese Festhalteeinrichtungen weisen Angriffsmittel auf, über die die Festhalteeinrichtungen in einen Zustand überführbar sind, in welchem die Festhalteeinrichtungen die Kabel freigeben, so dass die Kabel für den Kabeltransport in Richtung der Kabelachse bewegt werden können. Die genannten Angriffsmittel sind vorliegend als Schrauben 39 ausgeführt. In Fig. 6 sind zwei Anschläge 43, 45 erkennbar, die beim Erstellen der Aktivstellung mit den jeweiligen Schrauben 39 zusammenwirken. Der mit 43 bezeichnete Anschlag ist der Führungseinheit 7 zugeordnet und dient dem Entsichern der zugehörigen Festhalteeinrichtung. In der Aktivstellung der Führungseinheit 7 ist die Beaufschlagung des Kabels 3 durch die Festhalteeinrichtung aufgehoben, das Kabel 3 kann nun mittels der Kabelfördereinrichtung zur Bearbeitung des Kabelendes transportiert werden. Der mit 45 bezeichnete Anschlag ist der Führungseinheit 8 zugeordnet. Der Aufbau dieser Festhalteeinrichtung ist in nachfolgender Fig. 7 ersichtlich. Die Funktionsweise der Festhalteeinrichtung wird nachfolgend näher beschrieben.

Weitere konstruktive Details zum Kabelwechsler 6 sind in Fig. 7 gezeigt. Die beiden Führungseinheiten 7, 8 weisen Führungs- und Bremsmittel zum Führen und Einspannen der jeweiligen Kabel 3, 4 auf. Diese Führungs- und Bremsmittel sind bei beiden Führungseinheiten 7, 8 gleich ausgestaltet. Da in der Darstellung gemäss Fig. 7 die Führungseinheit 8 besser erkennbar ist, wird nachfolgend deren Aufbau anhand der Führungseinheit 8 erläutert. Die diesbezüglichen Ausführungen gelten jedoch ebenso betreffend die Führungseinheit 7.

Die Führungseinheit 8 umfasst ein eingangsseitig angeordnetes Führungsrohr 18, das in Bezug auf die Maschinenlängsachse 10 vor dem Bandantrieb zum Bilden der Kabelfördereinrichtung 5 angeordnet ist. Die Führungseinheiten 7, 8 weisen weitere Führungsrohre auf, die mit 18' bis 18‴ bezeichnet sind. Das Führungsrohr 18' schliesst an das Führungsrohr 18 an und kann mit diesem verbunden sein und somit aus einem Bauteil gebildet werden. Die Führungsrohre 18" und 18‴ werden durch separate Bauteile gebildet. Das Führungsrohr 18" ist in Bezug auf die Maschinenlängsachse 10 zwischen Bandantrieb 5 und einem Längenmesssystem 35 (vgl. Fig. 8) angeordnet. Das Führungsrohr 18‴ ist in Bezug auf die Maschinenlängsachse 10 nach bzw. hinter dem Längenmesssystem 33 angeordnet und definiert damit ein ausgangsseitiges Führungsmittel. Die Bohrungen zum Durchführen der Kabel der Führungsrohre 18, 18′, 18ʺ, 18‴ können derart gewählt werden, dass sie an den Kabelaussendurchmesser angepasst sind.

Weiterhin umfasst die Führungseinheit 8 zwei Festhalteeinrichtungen 19 und 19', mit deren Hilfe das Kabel 4 eingespannt wird. Die Festhalteeinrichtungen 19 und 19' weisen federbelastete Bremsen auf. Das Bremsmittel der Festhalteeinrichtungen 19 weist jeweils ein Klemmglied 36 auf, das mittels einer Schraubendruckfeder 37 das Kabel klemmend beaufschlägt und so festhält. Am Klemmglied 36 ist weiter die Schraube 39 seitlich angeordnet, die ein Angriffsmittel für die Wirkverbindung mit dem (hier nicht dargestellten) Anschlag beim Erstellen der Aktivstellung bildet.

Die Führungseinheit 8 ist an einem Trägerteil 38 angeordnet. Die Hebelanordnung für die Schwenkbewegung ist zweiteilig ausgestaltet und umfasst zwei Hebelteile 17 und 17'. Das Hebelteil 17 ist am vorderen bzw. eingangsseitigen Ende der Führungseinheit 8 und das Hebelteil 17' ist am ausgangsseitigen bzw. hinteren Ende der Führungseinheit 8 angeordnet. In der zweiteiligen Hebelanordnung sind zwei Rückstellfedern 25 zum Vorspannen der Führungseinheit 8 in der Ruhestellung vorgesehen.

Mit 40 ist ein der Führungseinheit 8 zugeordnetes Angriffsglied bezeichnet, das beim Absenken des Schubelements 13 zum Erstellen der Aktivstellung der Führungseinheit 8 an die Führungsbahn 20 anschlägt und die Auflaufflanke 22 abfährt. Das Angriffsglied 40, das durch das Führungsrohr 18 gebildet wird, weist eine zylindrische Form auf, wodurch ein vorteilhaftes Gleiten sich ergibt. Selbstverständlich könnten auch andere Angriffsmittel vorgesehen werden. Zum Beispiel könnte das Angriffsglied 40 durch eine Rolle gebildet sein. In diesem Fall würde die Führungseinheit 8 rollend an der Führungsbahn 20 entlang fahren.

Die Führungsbahn 20 mit den beiden Auflaufflanken 21 und 22 wird durch ein plattenförmiges Bauteil gebildet. Vor dem Kabelwechsler 6 ist ein Trennelement 30 zum Separieren und Ordnen der zwei Kabel 3 und 4 angeordnet. Das durch ein T-förmiges Profil gebildete Trennelement 30 mit einer vertikal verlaufenden Trennsteg und einem an die Trennplatte anschliessenden Fussabschnitt verhindert ein Kreuzen oder sich Berühren der Kabel 3 und 4. Alternativ zum T-Profil wäre auch eine einfache, vertikale Trennplatte vorstellbar. Das Trennelement 30 ist um die mit 44 bezeichnete vertikale Schwenkachse schwenkbar (Fig. 7). Das Trennelement 30 schwenkt je nach Betriebsstellung zu der Führungseinheit 7, 8 hin, die in der Ruhestellung verbleiben soll.

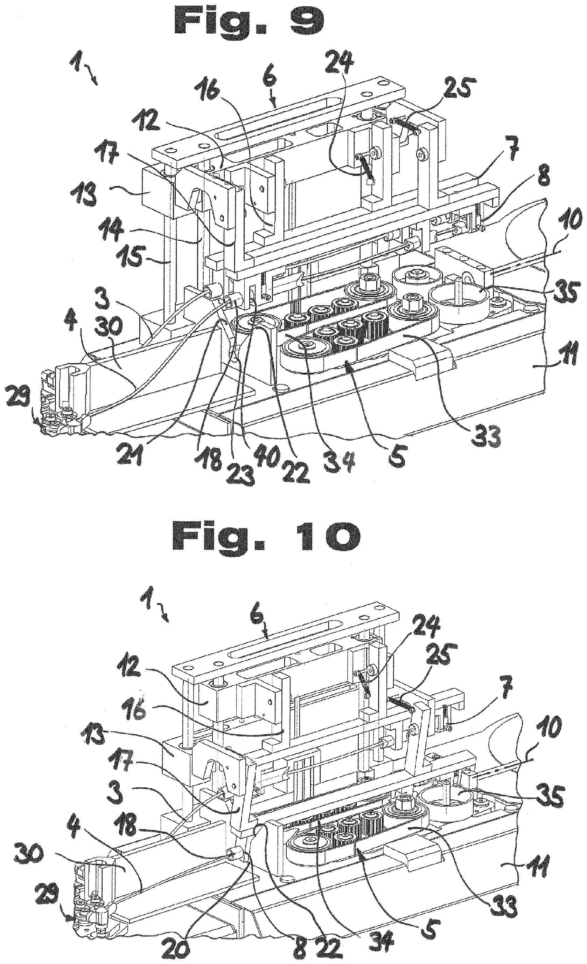

Die Funktionsweise der Kabelbearbeitungseinrichtung 1 mit dem Kabelwechsler 6 erschliesst sich weiter aus den Figuren 8 bis 11. In Fig. 8 ist der Kabelwechsler 6 in seiner Ausgangsstellung, in der beide Führungseinheiten 7 und 8 in ihren Ruhestellungen sind. Unterhalb des Kabelwechslers ist die als Bandantrieb ausgestaltete Kabelfördereinrichtung 5 angeordnet. Der Bandantrieb der Kabelfördereinrichtung 5 weist zwei einander gegenüberliegende Bänder 33, 34 auf. Damit ein Kabel in die Kabelfördereinrichtung 5 eingebracht werden kann, müssen die Bänder 33, 34 voneinander weg bewegt werden. Diese Öffnungsbewegung der Kabelfördereinrichtung 1 ist mit den Pfeilen k angedeutet. In Fig. 9 befindet sich die Kabelfördereinrichtung 5 in der Offenstellung. Je nach Wahl kann nun eines der Kabel 3, 4 zwischen die Bänder 33 und 34 eingebracht werden. Wenn beispielsweise das Kabel 4 der Bearbeitung zugeführt werden soll, muss die entsprechende Führungseinheit 8 durch Absenken der Schubelemente 13 in die Aktivstellung gebracht werden. Fig. 10 zeigt den Kabelwechsler 6 mit der Führungseinheit 8 in der Aktivstellung bei noch offenem Bandantrieb der Kabelfördereinrichtung 5. Das Längenmesssystem 35 ist im Übrigen zusammen mit dem Bandantrieb zwischen einer Offenstellung und einer Schliesstellung bewegbar. Die andere Führungseinheit 7 verbleibt in der Ruhestellung. Das Klemmglied 36, das mittels der Schraubendruckfeder 37 das Kabel 4 in der Ruhestellung klemmend beaufschlagt und festgehalten hat, wird durch Einwirkung eines orstfesten, dem Maschinensupport zugeordneten (hier nicht dargestellten, siehe jedoch Fig. 7) Anschlag 45 zurück verschoben. Die Schraube 39 dient dabei als Angriffsmittel, das mit dem erwähnten Anschlag 45 in Kontakt kommt. Dieser Anschlag könnte durch ein separates, am Maschinensupport befestigtes Bauteil gebildet werden. Vorstellbar wäre aber auch, den Anschlag durch entsprechende Ausgestaltung der Führungsbahn 20 vorzugeben. Beispielsweise könnte der Anschlag eine Nase sein, die rückseitig an der Führungsbahn 20 angeordnet oder angebracht ist. Die Festhalteeinrichtungen 19 wirkt also derart mit der Führungsbahn 20 zusammen, dass beim Erstellen der Aktivstellung die Klemmwirkung auf das Kabel 4 aufgehoben und das Kabel 4 bezüglich der Kabelachse freigegeben wird. Dank der Führungsbahn 20 kann somit die Beaufschlagung des Kabels 4 automatisch durch Bewegen der Führungseinheit 8 aufgehoben werden. Alternativ wäre es auch vorstellbar, die Festhalteeinrichtungen 19 über eine (nicht dargestellte) Steuereinheit anzusteuern, um das Klemmglied 36 von der klemmenden Stellung in die Freigabestellung umzuschalten.

Nachdem die Bänder 33, 34 des Bandantriebs der Kabelfördereinrichtung 5 aufeinander zubewegt und in die Schliessstellung gebracht werden, in der die Bänder 33, 34 das Kabel 4 kontaktieren, sowie die Rollen des Längenmesssystems 33 in die Schliessstellung gebracht werden, kann das Kabel in t-Richtung entlang der Maschinenlängsachse 10 transportiert und danach in den entsprechenden Bearbeitungsstationen verarbeitet werden. Der Bandantrieb kann das Kabel 4 bis zu einem (nicht dargestellten) Messerkopf einer Abläng- und Abisolierstation vorwärts transportieren, wo die Verarbeitung des Kabels 4 beginnen kann. Während den Verarbeitungsprozessen hat der Bediener Zugriff auf die in der Ruhelage verbliebene Führungseinheit 7 und kann dort bei Bedarf ein anderes Kabel einspannen.

Für den Kabelwechsel vom Kabel 4 auf das andere Kabel 3 muss die als Kabelvorschub ausgestaltete Kabelfördereinrichtung 5 das Kabel 4 rückwärts transportieren, bis es nicht mehr über die Führungseinheit 8 hinaussteht. Anschliessend bringt der Pneumatikzylinder 28 die Führungseinheit 8 nach oben in die Ruhestellung, worauf die andere Führungseinheit 7 mit dem Kabel in die Aktivstellung überführt werden kann.

Das gezeigte und vorgängig beschriebene Ausführungsbeispiel der Kabelbearbeitungseinrichtung 1 mit dem vorteilhaften Kabelwechsler 6 betrifft lediglich eine mögliche konstruktive Variante. Selbstverständlich sind auch andere Ausgestaltungen möglich. Zum Beispiel liesse sich zumindest ein Teil der Mechanik des Kabelwechslers 6 unter die Kabelfördereinrichtung 5 verlegen und damit die Zugänglichkeit für den Bediener nochmals zu verbessern. Der oder die Pneumatikzylinder zum Betreiben der Führungseinheiten 7, 8 könnten unter die Kabelfördereinrichtung 5 verlegt werden und nach unten wirkend ausgeführt sein. Zusätzlich könnten die die Schubführungen 14, 15 und die Schubelemente 12, 13 ebenfalls nach unten verlegt werden, sodass nur noch die Trägerteile 38, welche die Führungs- und Bremsmittel für die jeweiligen Kabel tragen, über die Kabelfördereinrichtung 5 ragen würden. Die Schwenkachsen könnten ebenfalls nach unten verlagert und die Führungsbahn durch unten platzierte Steuerkurven ersetzt werden. Die Bremsen könnten aktiv z.B. über Bowdenzüge betätigt werden.

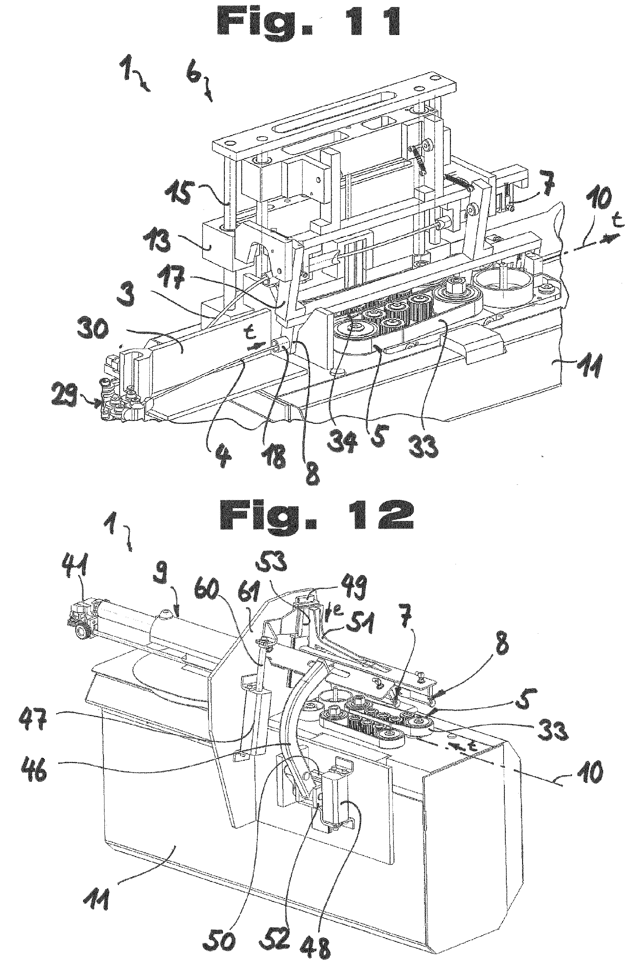

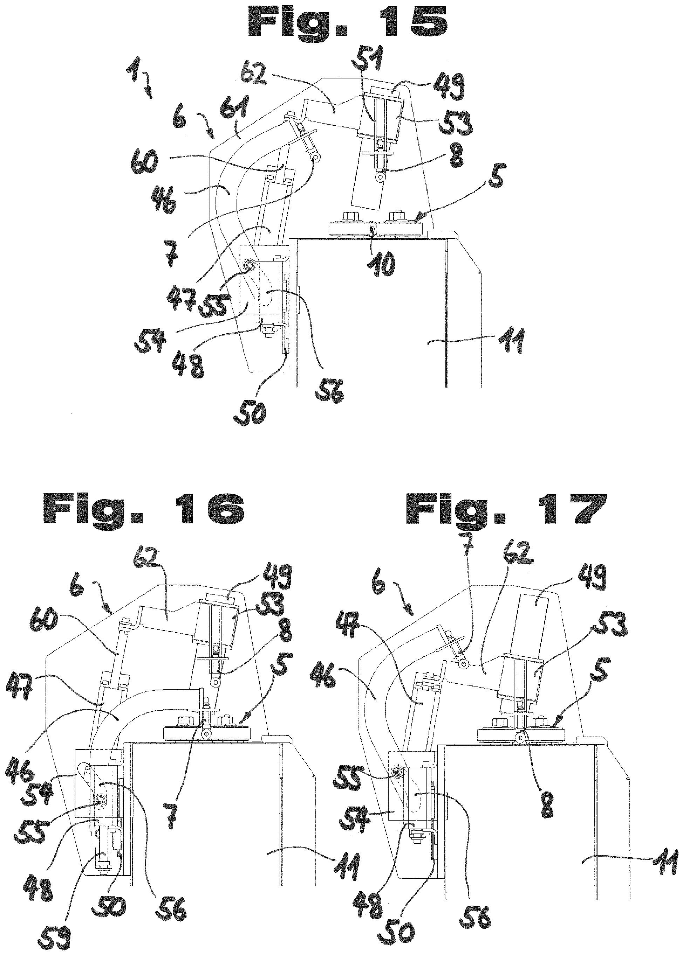

In den Figuren 12 bis 17 ist ein zweites Ausführungsbeispiel für eine erfindungsgemässe Kabelbearbeitungseinrichtung 1 zum Bearbeiten von Kabeln gezeigt. Bis auf den modifizierten Kabelwechsler 6 weist diese Kabelbearbeitungseinrichtung 1 denselben Aufbau wie die vorgängig beschriebene Kabelbearbeitungseinrichtung 1 aus Fig. 1 auf. Auch diese Kabelbearbeitungseinrichtung 1 kann eine vor der Kabelfördereinrichtung 5 angeordnete (hier nicht dargestellte) Richtstation aufweisen, mit der aus Fässern, Rollen oder Bündel an die Kabelbearbeitungseinrichtung 1 herangeführte (nicht dargestellte) Kabel gerade gerichtet werden.

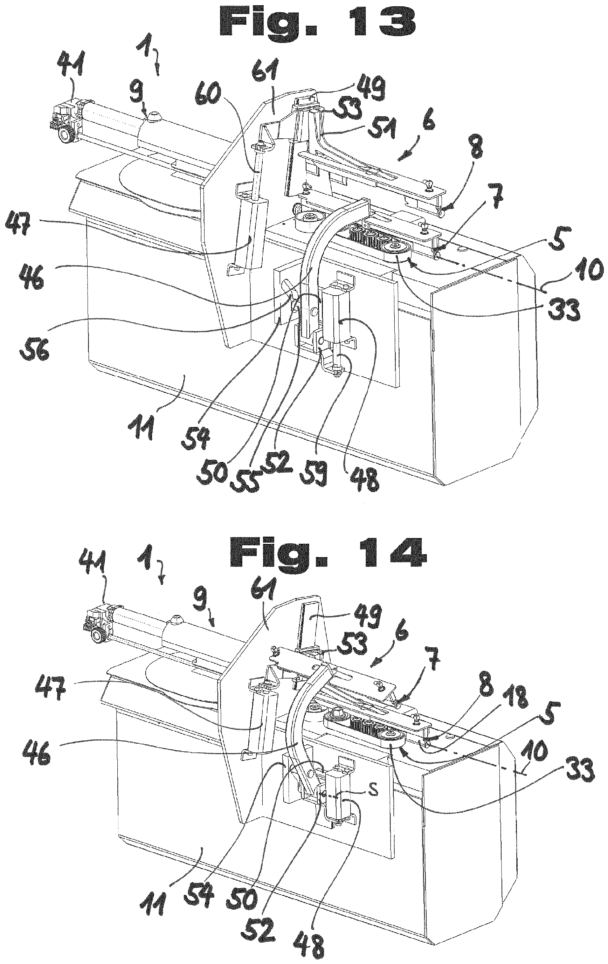

Fig. 12 zeigt den Kabelwechsler 6 in der Ausgangsstellung, in der beide Führungseinheiten 7, 8 sich in ihren Ruhestellungen befinden. Die Führungseinheiten 7, 8 sind in der Ausgangsstellung nebeneinander liegend positioniert. Die Führungseinheiten 7, 8 sind von der Kabellängsachse 10 beabstandet. Wahlweise kann nun zum Erstellen einer Wirkverbindung mit der Kabelfördereinrichtung 5 eine der Führungseinheiten 7, 8 in die Aktivstellung gebracht werden. Die zwei Führungseinheiten 7, 8 sind unabhängig voneinander von der Ruhestellung in die Aktivstellung bewegbar. Der Kabelwechsler 6 ist derart ausgeführt, dass wenn eine der Führungseinheiten 7, 8 von der Ruhestellung in die Aktivstellung bewegt wird, die andere Führungseinheit 7, 8 ortsfest in der Ruhestellung verbleibt. In Fig. 13 ist die mit 7 bezeichnete Führungseinheit in der Aktivstellung; in Fig. 14 ist die mit 8 bezeichnete Führungseinheit in der Aktivstellung.

Die Führungseinheiten 7, 8 sind zum Bewegen zwischen Aktivstellung und Ruhestellung der jeweiligen Führungseinheit 7, 8 über Linearführungen 49, 50 verschiebbar gegenüber dem Maschinensupport 11 gelagert. Die Linearführung 49 für die Führungseinheit 8 umfasst eine gegenüber der Vertikalen in einer Schrägstellung in der Kabelbearbeitungseinrichtung angeordnete Profilschiene, auf der ein die Profilschiene umgreifender Schlitten 53 verschiebbar gelagert ist. Die Führungseinheit 8 ist über einen Haltearm 51 starr mit dem Schlitten 53 verbunden. Dadurch ist die der Linearführung 49 zugeordnete Führungseinheit 8 schräg zwischen Ruhestellung und Aktivstellung translatorisch bewegbar. Die schräg verlaufende translatorische Absenkbewegung zum Erstellen der Aktivstellung ist in Fig. 12 mit einem Pfeil e angedeutet. Wie aus Fig. 13 erkennbar ist, liegt die Führungseinheit 8 in der Aktivstellung auf der Maschinenlängsachse 10 und ist folglich koaxial zur Maschinenlängsachse 10 positioniert. Bezugsgrösse für die Positionsfeststellung bildet dabei die Kabelachse, entlang der in axialer Richtung das (nicht dargestellte) Kabel durch die Führungseinheit 8 transportiert werden kann. Die koaxiale Anordnung von Führungseinheit 8 und Maschinenlängsachse ist beispielsweise daran erkennbar, dass das Führungsrohr 18 der Führungseinheit 8 auf der Achse 10 liegt.

Auch die Bewegung der anderen Führungseinheit 7 erfolgt über eine Linearführung 50. Die Linearführung 50 umfasst eine vertikale Profilschiene, in der ein Schlitten mit einem Lagerteil 52 verschiebbar gelagert ist. Am Lagerteil 52 ist ein Hebelteil 46 schwenkbar gelagert (die entsprechende Schwenkachse ist mit S bezeichnet), an dessen dem Lagerteil 52 gegenüberliegenden Ende die Führungseinheit 7 befestigt ist. Für eine definierte Bewegung der Führungseinheit 7 von der Ruhestellung in die Aktivstellung ist eine Kulisse 54 vorgesehen. Die Kulisse 54 weist einen Führungsschlitz 56 auf, in dem ein Steuerkörper 55 entlang fahrbar ist. Der Steuerkörper 55 weist eine Rolle auf, die im Führungsschlitz 56 in einer geschlossenen Bahn läuft. Die Rolle des Steuerkörper 55 ist frei drehbar am Hebelteil 46 angebracht. Das Hebelteil 46 ist bogenförmig ausgebildet.

Zum Bewegen der Führungseinheiten 7, 8 werden Pneumatikzylinder 47, 48 verwendet. In Fig. 13 sind von beiden Pneumatikzylindern 47, 48 die jeweiligen Kolben 59, 60 erkennbar, die jeweils ausgefahren sind. Anstelle von Pneumatikzylindern könnten auch andere linear wirkende Aktuatoren zum jeweiligen Bewegen der Führungseinheiten 7, 8 zwischen Ruhestellung und Aktivstellung eingesetzt werden. Neben den gezeigten Pneumatikzylindern 47, 48, wären auch Hydraulikzylinder, elektromechanische Linearantriebe, Zahnstangenantriebe oder Spindelantriebe vorstellbar.

Die Profilschiene der Linearführung 49 sowie der Pneumatikzylinder 47 ist an einer am Maschinensupport angebrachten plattenförmige Stützkonstruktion 61 befestigt. Die Platte der Stützkonstruktion 61 verlauft auf einer vertikalen Ebene, die senkrecht zur Längsmittelachse 10 ist. Diese Platte bewirkt auch eine Trennung von Arbeitsbereichen, wodurch das Bedienpersonal vor Personenunfällen geschützt ist.

Der Kabelwechsler 6 gemäss dem zweiten Ausführungsbeispiel benötigt keine Postioniersenke zum Festlegen der Aktivstellung der jeweiligen Führungseinheit 7, 8 wie beim ersten Ausführungsbeispiel. Weiterhin sind auch keine Federn zum Erzwingen einer Rückstellbewegung notwendig.

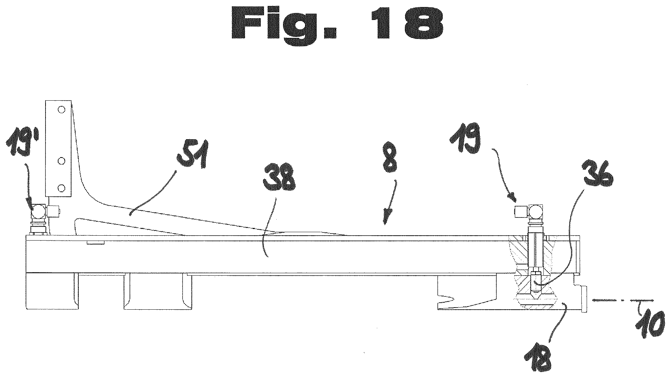

Fig. 18 zeigt Details der Festhalteeinrichtung 19, 19' zum Sichern des Kabels in der Ruhestellung. Die Festhalteeinrichtung 19, 19' weist zwei pneumatische Klemmzylinder je Führungseinheit 7 auf (die Festhalteeinrichtung der anderen Führungseinheit 8 ist gleichartig ausgestaltet). Die Klemmzylinder umfassen jeweils Klemmglieder 36 zum klemmenden Beaufschlagen des Kabels. Die beiden Klemmzylinder der Festhalteeinrichtung 19, 19' können gemeinsam geöffnet werden, was zum Beispiel mittels Schalter oder anderer Schaltmittel ausgelöst werden kann. Das Öffnen der Festhalteeinrichtung 19, 19' in der Aktivstellung kann für einen effizienten und sicheren Betrieb programmgesteuert vorgenommen werden.

## Patentansprüche

1. Kabelbearbeitungseinrichtung (1) mit wenigstens einer Bearbeitungsstation (2) zum Bearbeiten von Kabelenden von Kabeln (3, 4), einer entlang einer Maschinenlängsachse (10) verlaufenden Kabelfördereinrichtung (5) zum Transportieren eines Kabels (3, 4) in Richtung der Maschinenlängsachse (10) zur wenigstens einen Bearbeitungsstation (2) und mit einem im Bereich der Kabelfördereinrichtung (5) angeordneten Kabelwechsler (6) zum wahlweisen Zuführen von Kabeln (3, 4) zur wenigstens einen Bearbeitungsstation (2) zur Bearbeitung der Kabelenden, wobei der Kabelwechsler (6) wenigstens zwei Führungseinheiten (7, 8) zum Führen und Halten jeweils eines Kabels aufweist, wobei die Führungseinheiten (7, 8) zwischen einer Ruhestellung und einer Aktivstellung bewegbar sind, wobei in der Ruhestellung die Führungseinheit (7, 8) ausserhalb der Kabelfördereinrichtung positioniert und von der Maschinenlängsachse (10) beabstandet ist und wobei in der Aktivstellung die Führungseinheit (7, 8) zum Erstellen einer Wirkverbindung mit der Kabelfördereinrichtung (5) koaxial zur Maschinenlängsachse (10) positioniert ist, **dadurch gekennzeichnet, dass** die wenigstens zwei Führungseinheiten (7, 8) unabhängig voneinander von der Ruhestellung in die Aktivstellung bewegbar sind, wobei der Kabelwechsler (6) derart ausgeführt ist, dass wenn eine der Führungseinheiten (7, 8) von der Ruhestellung in die Aktivstellung bewegt wird, die andere oder anderen Führungseinheiten (7, 8) ortsfest in der Ruhestellung verbleibt bzw. verbleiben.

2. Kabelbearbeitungseinrichtung (1) nach Anspruch 1, **dadurch gekennzeichnet, dass** die Führungseinheiten (7, 8) des Kabelwechslers (6), wenn sich die Führungseinheiten (7, 8) jeweils in ihren Ruhestellungen befinden, nebeneinander und vorzugsweise auf einer gemeinsamen horizontalen Ebene liegend positioniert sind.

3. Kabelbearbeitungseinrichtung (1) nach Anspruch 1 oder 2, **dadurch gekennzeichnet, dass** die Führungseinheiten (7, 8) jeweils mit Schubelementen (12, 13; 52, 53) verbunden sind, wobei die Schubelemente (12, 13) zum Bewegen der jeweiligen Führungseinheiten (7, 8) zwischen Aktivstellung und Ruhestellung translatorisch bewegbar sind.

4. Kabelbearbeitungseinrichtung (1) nach Anspruch 3, **dadurch gekennzeichnet, dass** der Kabelwechsler (6) Schubführungen (14, 15) zum Absenken und Anheben der jeweiligen Führungseinheiten (7, 8) aufweist, an welchen die Schubelemente (12, 13) jeweils verschiebbar gelagert sind.

5. Kabelbearbeitungseinrichtung (1) nach Anspruch 3 oder 4, **dadurch gekennzeichnet, dass** die jeweilige Führungseinheit (7, 8) über eine Hebelanordnung mit wenigstens einem Hebelteil (16, 16'; 17, 17') schwenkbar am jeweiligen Schubelement (12, 13) gelagert.

6. Kabelbearbeitungseinrichtung (1) nach einem der Ansprüche 1 bis 5, **dadurch gekennzeichnet, dass** eine Führungsbahn (20) für eine definierte Bewegung der Führungseinheit (7, 8) von der Ruhestellung in die Aktivstellung vorgesehen ist.

7. Kabelbearbeitungseinrichtung (1) nach Anspruch 6, **dadurch gekennzeichnet, dass** die Führungsbahn (20) gegenüberliegend der Führungseinheiten (7, 8) angeordnet ist und dass die entsprechende Führungseinheit (7, 8) derart bei einer Absenkbewegung des Schubelements (12, 13) zum Erstellen der Aktivstellung mit der Führungsbahn (20) zusammenwirkt, dass die Führungseinheit (7, 8) an der der Führungsbahn (20) entlang fahrbar ist.

8. Kabelbearbeitungseinrichtung (1) nach Anspruch 7, **dadurch gekennzeichnet, dass** die Führungsbahn (20) wenigstens eine Auflaufflanke (21, 22) aufweist, an der jeweils eine der Führungseinheiten (7, 8) entlang fahrbar ist.

9. Kabelbearbeitungseinrichtung (1) nach Anspruch 8, **dadurch gekennzeichnet, dass** an die wenigstens eine Auflaufflanke (21, 22) eine Positioniersenke (23) zum lagemässigen Fixieren der Führungseinheit (7, 8) in der Aktivstellung aufweist.

10. Kabelbearbeitungseinrichtung (1) nach Anspruch 7 oder 8, **dadurch gekennzeichnet, dass** die Führungsbahn (20) zwei jeweils einer Führungseinheit (7, 8) zugeordnete, V-förmig aufeinander zu laufende Auflaufflanken (21, 22) aufweist.

11. Kabelbearbeitungseinrichtung (1) nach einem der Ansprüche 1 bis 10, **dadurch gekennzeichnet, dass** die Führungseinheiten (7, 8) jeweils eine Festhalteeinrichtungen (19) zum Sichern des jeweiligen Kabels in der Ruhestellung aufweist und dass die Festhalteeinrichtungen (19) derart ausgestaltet ist, dass beim Erstellen der Aktivstellung die Festhalteeinrichtungen (19) die insbesondere klemmende Beaufschlagung des Kabels (3, 4) aufgehoben wird.

12. Kabelbearbeitungseinrichtung (1) nach einem der Ansprüche 1 bis 11, **dadurch gekennzeichnet, dass** die Führungseinheit (7, 8) wenigstens ein Federelement (24, 25) zum Rückführen der Führungseinheit von der Aktivstellung in die Ruhestellung aufweist.

13. Kabelbearbeitungseinrichtung (1) nach Anspruch 12, **dadurch gekennzeichnet, dass** zum lagemässigen Fixieren der jeweiligen Führungseinheit (7, 8) in der Ruhestellung wenigstens ein Stopp- oder Positionierelement (26, 27) zum Bilden eines Anschlags für die Führungseinheit (7, 8) vorgesehen ist.

14. Kabelbearbeitungseinrichtung (1) nach einem der Ansprüche 1 bis 13, **dadurch gekennzeichnet, dass** vor dem Kabelwechsler (6) wenigstens ein Trennelement (30) zum Separieren und Ordnen der Kabel (3, 4) angeordnet ist.

15. Kabelbearbeitungseinrichtung (1) nach einem der Ansprüche 1 bis 14, **dadurch gekennzeichnet, dass** die Führungseinheiten (7, 8) zum Bewegen der jeweiligen Führungseinheiten (7, 8) zwischen Aktivstellung und Ruhestellung jeweils über Linearführungen (49, 50) verschiebbar gegenüber einem Maschinensupport (11) der Kabelbearbeitungseinrichtung (1) gelagert sind.

16. Kabelbearbeitungseinrichtung (1) nach einem der Ansprüche 1 bis 15, **dadurch gekennzeichnet, dass** wenigstens eine der Linearführungen (49) in einer Schrägstellung in der Kabelbearbeitungseinrichtung (1) angeordnet ist, so dass der vorgenannten Linearführung (49) zugeordnete Führungseinheit (8) schräg zwischen Ruhestellung und Aktivstellung translatorisch bewegbar ist.

17. Kabelbearbeitungseinrichtung (1) nach einem der Ansprüche 1 bis 16, **dadurch gekennzeichnet, dass** eine Kulisse (54) für eine definierte Bewegung wenigsten einer der Führungseinheiten (7) entlang einer Steuerkurve von der Ruhestellung in die Aktivstellung vorgesehen ist.

18. Kabelbearbeitungseinrichtung (1) nach Anspruch 17, **dadurch gekennzeichnet, dass** die Kulisse (54) einen Führungschlitz (56) oder eine Führungssnut aufweist, in dem ein Steuerkörper (55) entlang fahrbar ist.

19. Kabelbearbeitungseinrichtung (1) nach Anspruch 18, **dadurch gekennzeichnet, dass** der Steuerkörper (55) an einem Hebelteil (46) zum Tragen der jeweiligen Führungseinheit (7) angeordnet ist.

20. Kabelbearbeitungseinrichtung (1) nach Anspruch 19, **dadurch gekennzeichnet, dass** das Hebelteil (46) bogenförmig ausgebildet ist.

21. Kabelbearbeitungseinrichtung (1) nach Anspruch 16 sowie nach einem der Ansprüche 17 bis 20, **dadurch gekennzeichnet, dass** eine der Führungseinheiten (8) zwischen Ruhestellung und Aktivstellung schräg translatorisch bewegbar ausgestaltet ist und die andere Führungseinheit (7) zwischen Ruhestellung und Aktivstellung eine durch die Kulisse (54) vorgegebene Kurve folgt.

22. Kabelbearbeitungseinrichtung (1) nach Anspruch 16 sowie nach einem der Ansprüche 17 bis , **dadurch gekennzeichnet, dass** die Kabelbearbeitungseinrichtung (1) zum jeweiligen Bewegen der Führungseinheiten (7, 8) zwischen Ruhestellung und Aktivstellung linear wirkende Aktuatoren, die aus einer Gruppe bestehend aus Pneumatikzylindern (28; 47, 48), Hydraulikzylindern, elektromechanischen Linearantrieben, Zahnstangenantrieben oder Spindelantrieben ausgewählt sind.

## Claims

1. Cable processing device (1) comprising at least one processing station (2) for processing cable ends of cables (3, 4), a cable conveying device (5) running along a machine longitudinal axis (10) for transporting a cable (3, 4) to at least one processing station (2) in the direction of the machine longitudinal axis (10), and comprising a cable changer (6), arranged in the region of the cable conveying device (5), for the selective supply of cables (3, 4) to at least one processing station (2) for processing the cable ends, the cable changer (6) having at least two guide units (7, 8) for guiding and holding one cable each, the guide units (7, 8) being movable between an inoperative position and an active position, the guide unit (7, 8) being positioned, in the inoperative position, outside the cable conveying device and spaced apart from the machine longitudinal axis (10) and the guide unit (7, 8) being positioned, in the active position, coaxially with respect to the machine longitudinal axis (10) in order to produce an operative connection to the cable conveying device (5), **characterized in that** the at least two guide units (7, 8) are movable independently of each other from the inoperative position into the active position, the cable changer (6) being designed in such a manner that, when one of the guide units (7, 8) is moved from the operative position into the active position, the other guide unit(s) (7, 8) remain(s) positionally fixed in the inoperative position.

2. Cable processing device (1) according to claim 1, **characterized in that** when the guide units (7, 8) of the cable changer (6) are in their respective inoperative positions, the guide units (7, 8) are positioned lying next to each other and preferably on a common horizontal plane.

3. Cable processing device (1) according to either claim 1 or claim 2, **characterized in that** the guide units (7, 8) are each connected to push elements (12, 13; 52, 53), the push elements (12, 13) being translationally movable in order to move the respective guide units (7, 8) between the active position and the inoperative position.

4. Cable processing device (1) according to claim 3, **characterized in that** the cable changer (6) comprises push guides (14, 15) for lowering and lifting the respective guide units (7, 8), on which push guides the push elements (12, 13) are each displaceably mounted.

5. Cable processing device (1) according to either claim 3 or claim 4, **characterized in that** each guide unit (7, 8) is rotatably mounted on the relevant push element (12, 13) by means of a lever assembly comprising at least one lever part (16, 16'; 17, 17').

6. Cable processing device (1) according to any of claims 1 to 5, **characterized in that** a guideway (20) is provided for defined movement of the guide unit (7, 8) from the inoperative position into the active position.

7. Cable processing device (1) according to claim 6, **characterized in that** the guideway (20) is arranged opposite the guide units (7, 8) and **in that** when the push element (12, 13) is lowered in order to produce the active position, the corresponding guide unit (7, 8) interacts with the guideway (20) such that the guide unit (7, 8) can be moved along the guideway (20).

8. Cable processing device (1) according to claim 7, **characterized in that** the guideway (20) comprises at least one run-on flank (21, 22) along which each of the guide units (7, 8) can be moved.

9. Cable processing device (1) according to claim 8, **characterized in that** the at least one run-on flank (21, 22) comprises a positioning trough (23) for fixing the guide unit (7, 8) in the active position.

10. Cable processing device (1) according to either claim 7 or claim 8, **characterized in that** the guideway (20) comprises two run-on flanks (21, 22) that are each associated with a guide unit (7, 8) and extend towards each other in a V shape.

11. Cable processing device (1) according to any of claims 1 to 10, **characterized in that** the guide units (7, 8) each comprise a retaining device (19) for securing the relevant cable in the inoperative position, and **in that** the retaining device (19) is configured in such a manner that when the active position is produced, the retaining devices (19) the impact, in particular clamping impact, on the cable (3, 4) is removed.

12. Cable processing device (1) according to any of claims 1 to 11, **characterized in that** the guide unit (7, 8) comprises at least one spring element (24, 25) for returning the guide unit from the active position into the inoperative position.

13. Cable processing device (1) according to claim 12, **characterized in that** in order to fix the relevant guide unit (7, 8) in the inoperative position, at least one stopping or positioning element (26, 27) is provided for forming a stop for the guide unit (7, 8).

14. Cable processing device (1) according to any of claims 1 to 13, **characterized in that** at least one separating element (30) for separating and organizing the cables (3, 4) is arranged upstream of the cable changer (6).

15. Cable processing device (1) according to any of claims 1 to 14, **characterized in that** the guide units (7, 8) are each mounted so as to be displaceable relative to a machine support (11) of the cable processing device (1) in order to move the respective guide units (7, 8) between the active position and the inoperative position by means of linear guides (49, 50).

16. Cable processing device (1) according to any of claims 1 to 15, **characterized in that** at least one of the linear guides (49) is arranged in the cable processing device (1) so as to be oblique, such that the guide unit (8) associated with the above-mentioned linear guide (49) can be translationally moved obliquely between the inoperative position and the active position.

17. Cable processing device (1) according to any of claims 1 to 16, **characterized in that** a slotted link (54) is provided for defined movement of at least one of the guide units (7) along a control curve from the inoperative position into the active position.

18. Cable processing device (1) according to claim 17, **characterized in that** the slotted link (54) comprises a guide slot (56) or a guide groove in which a control body (55) can be moved along.

19. Cable processing device (1) according to claim 18, **characterized in that** the control body (55) is arranged on a lever part (46) in order to support the relevant guide unit (7).

20. Cable processing device (1) according to claim 19, **characterized in that** the lever part (46) is curved.

21. Cable processing device (1) according to claim 16 and according to any of claims 17 to 20, **characterized in that** one of the guide units (8) is configured so as to be translationally movable obliquely between the inoperative position and the active position, and the other guide unit (7) follows a curve predetermined by the slotted link (54) between the inoperative position and the active position.

22. Cable processing device (1) according to claim 16 and according to any of claims 17 to , **characterized in that** the cable processing device (1) linearly acting actuators, which are selected from the group consisting of pneumatic cylinders (28; 47, 48), hydraulic cylinders, electromechanical linear drives, rack and pinion drives or spindle drives, for moving each of the guide units (7, 8) between the inoperative position and the active position.

## Revendications

1. Dispositif d'usinage des câbles (1) comportant au moins une station d'usinage (2) permettant d'usiner des extrémités de câble (3, 4), un dispositif de transport de câble (5) s'étendant le long d'un axe longitudinal de machine (10) et permettant de transporter un câble (3, 4) dans la direction de l'axe longitudinal de machine (10) vers l'au moins une station d'usinage (2), et comportant un changeur de câble (6) disposé dans la zone du dispositif de transport de câble (5) et permettant d'amener sélectivement des câbles (3, 4) vers l'au moins une station d'usinage (2) pour l'usinage des extrémités de câble, dans lequel le changeur de câble (6) comporte au moins deux unités de guidage (7, 8) permettant de guider et de supporter respectivement un câble, dans lequel les unités de guidage (7, 8) sont mobiles entre une position de repos et une position active, dans lequel dans la position de repos, l'unité de guidage (7, 8) est positionnée à l'extérieur du dispositif de transport de câble et est à distance de l'axe longitudinal de machine (10), et dans lequel en position active, l'unité de guidage (7, 8) est positionnée coaxialement à l'axe longitudinal de machine (10) pour créer une liaison active avec le dispositif de transport de câble (5), **caractérisé en ce que** les au moins deux unités de guidage (7, 8) sont mobiles indépendamment l'une de l'autre de la position de repos à la position active, dans lequel le changeur de câble (6) est conçu de telle sorte que, lorsque l'une des unités de guidage (7, 8) est déplacée de la position de repos à la position active, l'autre ou les autres unités de guidage (7, 8) restent immobiles dans la position de repos.

2. Dispositif d'usinage des câbles (1) selon la revendication 1, **caractérisé en ce que**, lorsque les unités de guidage (7, 8) du changeur de câble (6) sont respectivement dans leur position de repos, les unités de guidage (7, 8) sont positionnées adjacentes et, de préférence dans un plan horizontal commun.

3. Dispositif d'usinage des câbles (1) selon la revendication 1 ou 2, **caractérisé en ce que** les unités de guidage (7, 8) sont respectivement reliées à des éléments de poussée (12, 13 ; 52, 53), dans lequel les éléments de poussée (12, 13) sont mobiles pour déplacer les unités de guidage (7, 8) respectives en translation entre la position active et la position de repos.

4. Dispositif d'usinage des câbles (1) selon la revendication 3, **caractérisé en ce que** le changeur de câble (6) comporte des glissières (14, 15) permettant d'abaisser et de lever les unités de guidage (7, 8) respectives sur lesquelles les éléments coulissants (12, 13) sont respectivement montés coulissantes.

5. Dispositif d'usinage des câbles (1) selon la revendication 3 ou 4, **caractérisé en ce que** l'unité de guidage (7, 8) respective est montée pivotante sur l'élément de poussée (12, 13) respectif par l'intermédiaire d'un système de levier comportant au moins un organe de levier (16, 16' ; 17, 17').

6. Dispositif d'usinage des câbles (1) selon l'une quelconque des revendications 1 à 5, **caractérisé en ce qu'**un chemin de guidage (20) est prévu pour un mouvement défini de l'unité de guidage (7, 8) de la position de repos à la position active.

7. Dispositif d'usinage des câbles (1) selon la revendication 6, **caractérisé en ce que** le chemin de guidage (20) est disposé en face des unités de guidage (7, 8), et **en ce que** l'unité de guidage (7, 8) correspondante interagit avec le chemin de guidage (20) lors d'un mouvement d'abaissement de l'élément de poussée (12, 13) pour réaliser la position active de telle sorte que l'unité de guidage (7, 8) peut être déplacée le long du chemin de guidage (20).

8. Dispositif d'usinage des câbles (1) selon la revendication 7, **caractérisé en ce que** le chemin de guidage (20) comporte au moins un flanc d'arrêt (21, 22) le long duquel l'une des unités de guidage (7, 8) peut être déplacée.

9. Dispositif d'usinage des câbles (1) selon la revendication 8, **caractérisé en ce que** l'au moins un flanc d'arrêt (21, 22) comporte un creux de positionnement (23) permettant d'assurer le positionnement de l'unité de guidage (7, 8) dans la position active.

10. Dispositif d'usinage des câbles (1) selon la revendication 7 ou 8, **caractérisé en ce que** le chemin de guidage (20) comporte deux flancs d'arrêt (21, 22) respectivement associés à une unité de guidage (7, 8) et se dirigeant l'un vers l'autre en forme de V.

11. Dispositif d'usinage des câbles (1) selon l'une quelconque des revendications 1 à 10, **caractérisé en ce que** les unités de guidage (7, 8) comportent respectivement un dispositif de retenue (19) permettant de fixer le câble respectif dans la position de repos, et **en ce que** le dispositif de retenue (19) est conçu de telle sorte que, lors de la réalisation de la position active, les dispositifs de retenue (19) annulent, en particulier la sollicitation par serrage, du câble (3, 4).

12. Dispositif d'usinage des câbles (1) selon l'une quelconque des revendications 1 à 11, **caractérisé en ce qu'**une unité de guidage (7, 8) comporte au moins un élément à ressort (24, 25) permettant de faire retourner l'unité de guidage de la position active à la position de repos.

13. Dispositif d'usinage des câbles (1) selon la revendication 12, **caractérisé en ce que**, pour fixer la position de l'unité de guidage (7, 8) respective, dans la position de repos, au moins un élément de butée ou un élément de positionnement (26, 27) est fourni pour former une butée pour l'unité de guidage (7, 8).

14. Dispositif d'usinage des câbles (1) selon l'une quelconque des revendications 1 à 13, **caractérisé en ce qu'**au moins un élément de séparation (30) est disposé en amont du changeur de câble (6) permettant de séparer et de mettre en ordre les câbles (3, 4).

15. Dispositif d'usinage des câbles (1) selon l'une quelconque des revendications 1 à 14, **caractérisé en ce que** les unités de guidage (7, 8), pour déplacer les unités de guidage (7, 8) respectives entre la position active et la position de repos, sont respectivement montées, par l'intermédiaire des guidages linéaires (49, 50), coulissantes par rapport à un support de machine (11) du dispositif d'usinage des câbles (1).

16. Dispositif d'usinage des câbles (1) selon l'une quelconque des revendications 1 à 15, **caractérisé en ce que** l'au moins un des guidages linéaires (49) est disposé en position inclinée dans le dispositif d'usinage des câbles (1) de telle sorte que l'unité de guidage (8) associée audit guidage linéaire (49) peut être déplacée en translation oblique entre la position de repos et la position active.

17. Dispositif d'usinage des câbles (1) selon l'une quelconque des revendications 1 à 16, **caractérisé en ce qu'**une coulisse (54) est prévue pour un déplacement défini de l'au moins une des unités de guidage (7) le long d'une courbe de commande, de la position de repos à la position active.

18. Dispositif d'usinage des câbles (1) selon la revendication 17, **caractérisé en ce que** la coulisse (54) comporte une fente de guidage (56) ou une rainure de guidage dans laquelle un corps de commande (55) peut être déplacé.

19. Dispositif d'usinage des câbles (1) selon la revendication 18, **caractérisé en ce que** le corps de commande (55) est disposé sur un organe de levier (46) pour supporter l'unité de guidage (7) respective.

20. Dispositif d'usinage des câbles (1) selon la revendication 19, **caractérisée en ce que** l'organe de levier (46) est conçu en courbe.

21. Dispositif d'usinage des câbles (1) selon la revendication 16 ainsi que selon l'une quelconque des revendications 17 à 20, **caractérisé en ce que** l'une des unités de guidage (8) est conçue pour être déplacée en translation oblique entre la position de repos et la position active, et l'autre unité de guidage (7) suit une courbe prédéterminée par la coulisse (54) entre la position de repos et la position active.

22. Dispositif d'usinage des câbles (1) selon la revendication 16 ainsi que selon l'une quelconque des revendications 17 à 21, **caractérisé en ce que**, pour déplacer respectivement les unités de guidage (7, 8) entre la position de repos et la position active, des actionneurs agissant de façon linéaire sont sélectionnés d'un groupe constitué par les vérins pneumatiques (28 ; 47, 48), les vérins hydrauliques, les actionneurs linéaires électromécaniques, les mécanismes de commande à crémaillère ou les mécanismes de commande à broche.
